Europäisches Patentamt

European Patent Office

Office européen des brevets

(11) Veröffentlichungsnummer: **0 487 115 A1**

## (12) EUROPÄISCHE PATENTANMELDUNG

(21) Anmeldenummer: **91120052.5**

(22) Anmeldetag: **25.11.91**

(51) Int. Cl.5: **A23N 7/02**

(30) Priorität: **23.11.90 DE 4037216**

(43) Veröffentlichungstag der Anmeldung:
**27.05.92 Patentblatt 92/22**

(84) Benannte Vertragsstaaten:
**FR GB**

(71) Anmelder: **Dornow, Karl Dietrich**
**Kaiser-Friedrich-Ring 96**
**W-4000 Düsseldorf 11(DE)**

(72) Erfinder: **Dornow, Karl Dietrich**
**Kaiser-Friedrich-Ring 96**
**W-4000 Düsseldorf 11(DE)**

(74) Vertreter: **Bergen, Klaus, Dipl.-Ing. et al**
**Patentanwälte Dr.-Ing. Reimar König**
**Dipl.-Ing. Klaus Bergen Wilhelm-Tell-Strasse**
**14 Postfach 260162**
**W-4000 Düsseldorf 1(DE)**

(54) **Schälanlage zum mechanischen Schälen von Erd- oder Baumfrüchten.**

(57) Bei einer Schälanlage für Erd- oder Baumfrüchte, insbesondere Kartoffeln, bei der stationären, rotierenden Scheiben (12) Schälgut-Aufnahmebehälter (15) temporär zugeordnet sowie die Scheiben und/oder die Schälgut-Aufnahmebehälter mit Schälwerkzeugen versehen sind, werden auf einfache Art und Weise größere Durchsatzleistungen erreicht.

**Fig. 1**

Die Erfindung betrifft eine Schälanlage für Erd- oder Baumfrüchte, insbesondere Kartoffeln.

Es ist bekannt, rohe Erd- oder Baumfrüchte, wie Kartoffeln, Möhren, Zwiebeln, Sellerie, Rote Bete, Äpfel und Birnen mittels mechanisch arbeitender Maschinen zu schälen, wie insbesondere in einer Topfschälmaschine (Prospekt "Kartoffel- und Gemüsebearbeitungsmaschinen für Industrie und Großküche" der Firma Dornow Food technology, Düsseldorf). Bei Topfschälmaschinen - die sich nur diskontinuierlich betreiben lassen - bildet eine entweder mit körnigem Karborund beschichtete oder mit Messern bestückte oder gar nur aus Hartgummi bestehende, im Maschinengehäuse angeordnete, im Betrieb rotierende Scheibe den Boden für einen das Schälgut aufnehmenden Behälter; die Scheiben können mit Schälwerkzeugen (Messer, Karborund) versehen sein, sie wirken dann als Schälscheiben, oder aus Hartgummi bestehen und zum Aufwirbeln des Schälgutes gegen die schälende Behälterwand mit - wie im übrigen auch die Schälscheiben - Erhebungen versehen sein. Das Schälen der Erd- oder Baumfrüchte findet in der Regel auf der Scheibe und - insbesondere bei Karborund-Topfschälmsschinen - auch an der mit einem rauhen Belag, wie, Schmirgel oder Karborund, belegten Wand des Behälters statt. Die Scheibe, die üblicherweise horizontal oder fast horizontal angeordnet ist, wirbelt nämlich das zu schälende Gut gegen die Behälterwand.

Obwohl Topfschälmaschinen, die mit einer mit Messern bestückten Schälscheibe arbeiten (Messerschälmaschinen), eine ßehälterwand aus Hartgummi oder ähnlichem Material, d.h. ohne aufgerauhte Oberfläche besitzen könnten, ergibt doch eine mit körnigem Karborund belegte Behälterwand eine höhere Schälleistung. Es handelt sich somit um eine Ausnahme, wenn bei Topfschälmaschinen nur die Schälscheibe als Schälwerkzeug ausgebildet ist. Jedoch sind auch bei einer mit einer schälenden Behälterwand versehenen Topfschälmaschine die Durchsatzleistungen begrenzt, so daß sich ihr Einsatz im allgemeinen auf Klein- und Mittelbetriebe beschränkt.

Der Erfindung liegt die Aufgabe zugrunde, eine gattungsgemäße Schälanlage zu schaffen, bei der sich, insbesondere mit bekannten Topfschälmaschinen, auf einfache Art und Weise größere Durchsatzleistungen erreichen lassen.

Erfindungsgemäß wird diese Aufgabe dadurch gelöst, daß stationären, rotierenden Scheiben Schälgut-Aufnahmebehälter temporär zugeordnet sowie die Scheiben und/oder die Schälgut-Aufnahmebehälter mit Schälwerkzeugen versehen sind. Das in die Aufnahmebehälter eingefüllte Schälgut durchläuft somit kontinuierlich oder taktweise mehrere - vorzugsweise jeweils aus einem Maschinengehäuse und Schälwerkzeugen bestehende - Schälstationen, bevor es entnommen wird, wozu der Schälprozeß nicht unterbrochen zu werden braucht; das geschälte Gut läßt sich nämlich außerhalb einer Schälstation entnehmen. Die die Schälstationen definierenden Scheiben können auch in einem, d.h. allen Scheiben gemeinsamen Maschinengehäuse angeordnet sein. In jedem Fall wird das Schälgut stets entweder von mit Messern oder Karborund besetzten Scheiben, gegebenenfalls unterstützt durch den Abrieb der Schalen an der mit Karborund beschichteten Behälterwand, oder nur mittels der Behälterwand geschält; in letzterem Fall sind die Scheiben glatt, bestehen z.B. aus Hartgummi und dienen nur der Aufwirbelung des Schälguts, wozu sie mit geeigneten Wirbelkörpern (Noppen, Aufwerfungen, Erhöhungen) versehen sind.

Es wird vorgeschlagen, daß Schälmaschinengehäuse die rotierenden Scheiben aufweisen und über eine Gleitfläche für als Verschiebebehälter ausgebildete Schälgut-Aufnahmebehälter miteinander verbunden sind. Die Verschiehebehälter lassen sich somit auf der Gleitfläche von einer zur jeweils anderen Schälstation - beim kontinuierlichen Betrieb mit entsprechend niedrigen Verschiebegeschwindigkeiten - bewegen, bis das Gut in der letzten Schälstation fertiggeschält ist.

Vorteilhaft ist die Gleitfläche zumindest über zwei Schälmaschinengehäusen angeordnet, im Bereich der Scheiben mit zumindest den Scheibendurchmessern entsprechenden Öffnungen versehen und weist eine Entleerungsöffnung auf. Wenn die Erfindung mit Schälmaschinengehäusen handelsüblicher Topfschälmaschinen verwirklicht werden soll, müssen die das Schälgut aufnehmenden Behälter bekannter Topfschälmaschinen von ihrer starren funktionellen Bindung zu einem bestimmten Maschinengehäuse abgekoppelt und erfindungsgemäß stattdessen als Verschiebebehälter auf einer Gleitbahn angeordnet werden. Die Behälter lassen sich, wozu vorzugsweise lediglich ein sie von Öffnung zu Öffnung bewegender Antrieb benötigt wird, gegebenenfalls nach einer angemessenen Verweil- bzw. Taktzeit, die einstellbar ist, samt Behälterinhalt aufeinanderfolgend von Maschinengehäuse zu Maschinengehäuse verschieben. Anstatt der bei Topfschälmaschinen ansonsten diskontinuierlichen Arbeitsweise läßt sich nun ein kontinuierlicher Arbeitsablauf erreichen. Denn aufgrund der als Bewegungsebene für Verschiebebehälter ausgebildeten, mit Öffnungen für die Scheiben versehenen Gleitbahn ist es möglich, sich von der starren Gehäuse-Behälter-Zuordnung bekannter Topfschälmaschinen zu lösen und mehr Behälter als für die einzelnen Schälstationen benötigt vorzusehen. Dies erlaubt es, und zwar sowohl beim kontinuierlichen als auch taktweisen Verschieben, gleichzeitig einen Verschiebebehälter zu entleeren und einen anderen Verschiebebehälter mit neu zu schälendem Schälgut zu befüllen, während das Gut der sich in den Schälstationen befindenden bzw. über die Schälstationen hinwegbewegten Verschiebebehälter geschält wird.

Wenn die Gleitbahn auf einer in einem Maschinenrahmen angeordneten Platte mit auf einem Kreis liegenden Öffnungen ausgebildet ist, läßt sich gegenüber linearen Verschiebungen ein kontinuierlicher, karussellartiger Bewegungsablauf auf einer außerdem platzsparenden Kreisbahn erreichen, wobei die Gleitfläche auch auf einem Kreisring statt einer Platte gebildet werden könnte.

Nach einer bevorzugten Ausgestaltung der Erfindung umfaßt die Schälanlage drei im Halbkreis angeordnete Schälmaschinengehäuse und fünf auf der Gleitfläche bewegte Verschiebebehälter. Bei einer Schälanlage mit taktweise zu verschiebenden Behältern befinden sich von den somit vorhandenen fünf Verschiebebehältern drei Verschiebebehälter stets in einer Schälstation, während gleichzeitig stets ein Behälter entleert und ein weiterer Behälter mit Schälgut neu aufgefüllt wird. Nach einer ausreichenden Verweilzeit - die zumindest der für das Befüllen eines sich in der Einfüllstation befindenden Behälters benötigten Zeit entsprechen sollte - werden die vorzugsweise zylindrischen, oben und unten offenen Behälter um einen Takt, d.h. bis in die jeweils nächste Schälstation weiterbewegt. Die Verweilzeit und die Anzahl der Maschinengehäuse und damit Schälstationen sind so aufeinander abgestimmt, daß in der letzten Schälstation die gewünschte Schälgüte erreicht wird. Somit lassen sich sowohl ein automatischer, kontinuierlicher Betrieb als auch eine großindustrielle Nutzung mit einfachen Mitteln, nämlich bekannten, in ihren Durchsatzleistungen an sich begrenzten, relativ kleinen Topfschälmaschinen erreichen.

Wenn der Antrieb mit einer zentralen, Mitnehmerarme für die Verschiebebehälter aufweisenden Drehachse verbunden ist, läßt sich ein karussellartiger Bewegungsablauf mit lediglich einem Antriebsmotor erreichen.

Bei vorteilhaft um ihre Längsachse rotierend ausgebildeten Schälgut-Aufnahmebehältern wird der Abrieb der Schalen des gegen die Behälterwand geschleuderten Schälguts erhöht. Dieser Effekt wird durch gegensinnig angetriebene Scheiben und Behälter weiter verbessert.

Nach einer Ausgestaltung der Erfindung wird vorgeschlagen, daß die Behälter an ihren den Scheiben zugewandten Enden innen mit Verstrebungen versehen sind. Die Scheiben brauchen dann keine das Gut aufwirbelnden Erhöhungen aufzuweisen, so daß die Behälter einfacher zu verschieben sind; die - z.B. mit Gummistücken versehenen - Verstrebungen sorgen für die nötige Aufwirbelung.

Das Aufwirbeln läßt sich mit regelbaren Drehgeschwindigkeiten der Scheiben und/oder Behälter günstig beeinflussen.

Es empfiehlt sich, daß Schalenabläufe der Maschinengehäuse in einen zentralen, vorzugsweise an eine Abfallpumpe angeschlossenen Sammelrichter münden. Es lassen sich dann die Schalenreste (Schälabfall), die zusammen mit Wasser, das in die Behälter zum Reinigen der Behälterwand eingeleitet wird, über einen Spalt zwischen der Behälterwand und der Schälscheibe oder bei Messerschälscheiben über Zwischenräume zwischen den Messern zunächst in einen Schalensammelraum unterhalb der Scheibe und dann über die Schalenabläufe (Rohr) in den Sammeltrichter gelangen, zentral entsorgen.

Anstatt in einen Sammeltrichter können die Schalenabläufe über einer zentralen, von einem Abstreifer bestrichenen Entsorgungsplatte münden. Eine solche Platte empfiehlt sich dann, wenn eine größere Zahl Maschinengehäuse vorhanden ist und übermäßig lange, dann zu Verstopfungen neigende Schalenabläufe vermieden werden sollen. Der Abstreifer läßt sich vorteilhaft mit der Drehachse verbinden und somit deren Drehbewegung ausnutzen, um den Schalenabfall zur Pumpenöffnung zu befördern.

Wenn die Öffnungen der Gleitfläche mit in das Maschinengehäuse eintauchenden Manschetten versehen sind, ergibt sich eine Art Kanal, der dafür sorgt, daß selbst bei einem etwas größeren Spalt zwischen den Verschiebebehältern und den Scheiben dennoch der Schälabfall nicht unkontrolliert ablaufen kann, sondern gezielt abgeleitet wird. Weiterhin kann auf der Gleitfläche im Bereich der Öffnungen entlang der äußeren Bewegungsbahn der Verschiebebehälter ein Kragen angeordnet sein; dieser somit nur auf einer bestimmten Bogenlänge - nämlich dort, wo geschält wird - die Bewegungsbahn der Verschiebebehälter einfassende Kragen trägt dazu bei, daß Schalenreste nicht nach außen, sondern zur zentralen Entsorgung gelangen.

Mit einem Förderer, z.B. einem Kettenschubförderer mit entsprechend ausgebildeten Einschütttrichtern unter der Entleerungsöffnung läßt sich das entsprechend der eingestellten Schälzeit mit den Verschiebebehältern über die Entleerungsöffnung transportierte, dort nach unten durchfallende, fertig bearbeitete Schälgut regelmäßig und regelbar abtransportieren.

Es wird weiter vorgeschlagen, daß die Verschiebebehälter in einem unten von der Gleitfläche und oben von einer eine Füllöffnung aufweisenden Deckplatte begrenzten Raum zu bewegen sind. Auf diese Weise läßt sich ein nach außen abgekapselter Arbeitsbereich der erfindungsgemäß karussellartig arbeitenden Schälanlage erreichen. Die Deckplatte kann vorteilhaft vertikal oberhalb der Scheiben mit Ausnehmungen versehen sein. Dies erlaubt es, ohne die ansonsten geschlossene Bauweise zu beeinträchtigen, von oben Wasser in die Verschiebebehälter einzuleiten, um die Behälterwandungen zu reinigen und das Austragen der Schalenreste zu unterstützen. Die Ausnehmungen sollten zumindest entsprechend dem Durchmesser der Verschiebebehälter bemessen sein.

Die Erfindung wird nachfolgend anhand eines in der Zeichnung dargestellten. Ausführungsbeispiels näher erläutert. Es zeigen:

Fig. 1 eine erfindungsgemäße Karussell-Schälanlage, in teilweise geschnittener Seitenansicht;

Fig. 2 die Schälanlage gemäß Fig. 1 in der Draufsicht, in Richtung der Pfeile II-II gesehen;

Fig. 3 die Schälanlage gemäß Fig. 1, dort von links gesehen; und

Fig. 4 die Schälanlage gemäß Fig. 1 in der Draufsicht in Richtung der Pfeile IV-IV gesehen.

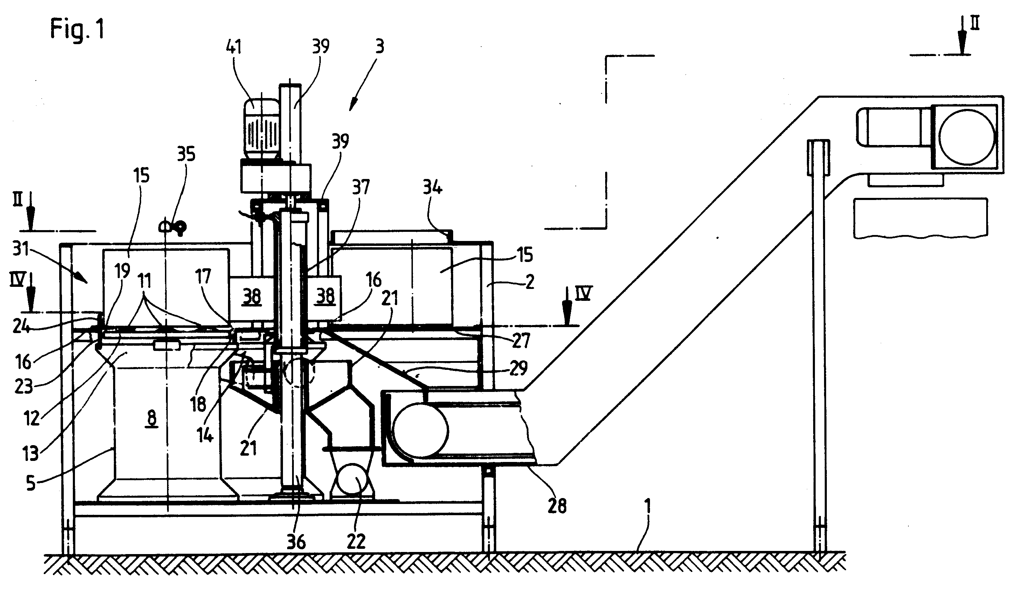

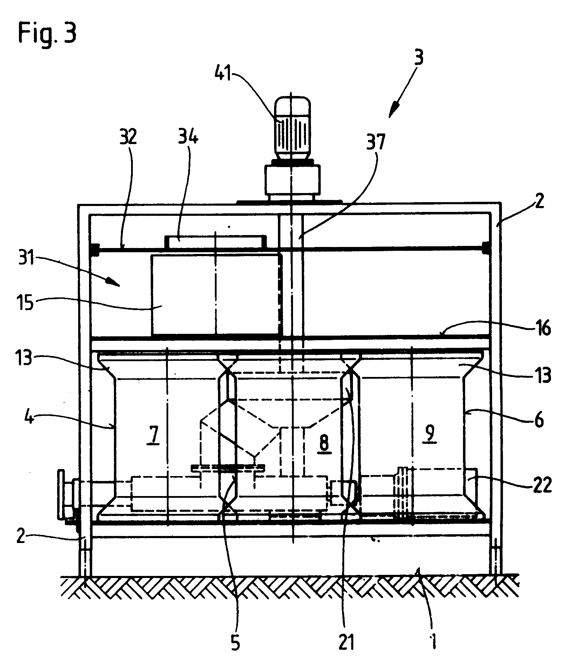

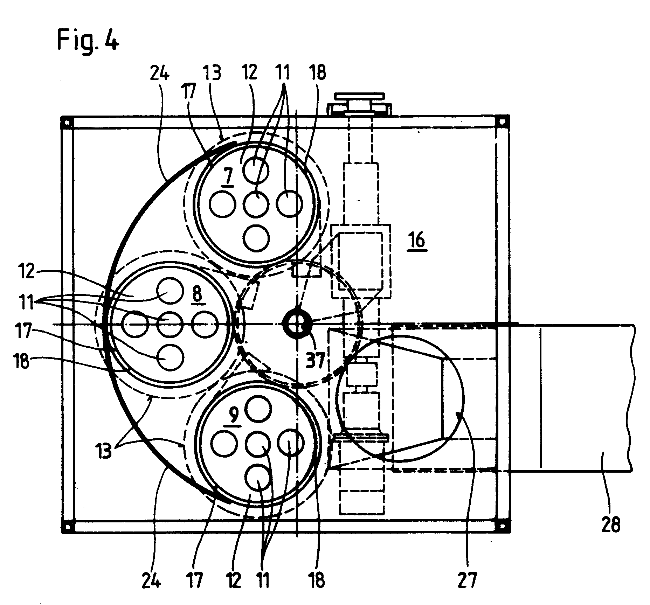

In einem auf einem Fundament 1 abgestützten Maschinenrahmen 2 einer sich im Ausführungsbeispiel aus Topfschälmaschinen zusammensetzenden Schälanlage 3 sind auf einem Halbkreis (vgl. Fig. 4) die Maschinengehäuse 4, 5, 6 von drei Topfschälmaschinen 7, 8, 9 (vgl. Fig. 3) angeordnet. Jedes Maschinengehäuse 4, 5, 6 besitzt eine an ihrer Oberfläche mit Gummi-Aufwerfungen 11 (s.Fig. 1 und 4) versehene, nachfolgend als Schälscheibe 12 (Messer- oder Karborundscheibe) bezeichnete Scheibe sowie einen im Gehäuse 4, 5, 6 unterhalb der Schälscheibe 12 angeordneten Schalensammelraum 13 mit einem Schalenablauf 14.

Das den Schälscheiben 12 der Maschinengehäuse 4, 5, 6 zugeführte, nicht dargestellte Schälgut befindet sich in Verschiebebehältern 15, die auf einer im Maschinenrahmen 2 in einer Höhe knapp oberhalb der rotierenden Schälscheiben 12 angeordneten Gleitfläche 16 einer Platte taktweise oder kontinuierlich im Kreis verschoben werden. Die Gleitfläche 16 besitzt entsprechend der Zahl der vorhandenen Maschinengehäuse 4, 5, 6 drei Öffnungen 17 (s. Fig. 4), die die Schälscheiben 12 konzentrisch, mit einem radialen Spalt 18 (vgl. Fig. 1 und 4) umgeben, der lediglich aus Gründen der besseren zeichnerischen Darstellung unverhältnismäßig groß gezeichnet ist. Aufgrund der geringfügig unterhalb der Gleitfläche 16 liegenden Schälscheiben 12 befindet sich außerdem ein Höhenspalt 19 zwischen den Verschiebebehältern 15 und den Schälscheiben 12. Die Öffnungen 17 und damit auch die Schälscheiben 12 und die Verschiebebehälter 15 besitzen einen kleineren Durchmesser als die Schalensammelräume 13 der Maschinengehäuse 4, 5, 6, so daß die anfallenden Schalenreste über die Spalte 18, 19 oder - bei Einsatz einer Messerschälscheibe - über Freiräume zwischen den Messern in den Schalensammelraum 13 und von dort über die Schalenabläufe 14 in einen der zentralen Entsorgung dienenden, zentrisch angeordneten Sammeltrichter 21 gelangen. Eine an den Sammeltrichter 21 angeschlossene Abfallpumpe 22 sorgt für die Abfuhr der Schalenreste aus der Maschine 3.

Die Öffnungen 17 sind einerseits unterhalb der Gleitfläche 16 mit Manschetten 23 versehen, d.h. nach unten umlaufend eingefaßt, und weisen andererseits oberhalb der Gleitfläche 16 einen Kragen 24 (s. Fig. 4) auf, der die Öffnungen 17 nach außen einfaßt und sich - entsprechend der Bogenlänge der halbkreisförmigen Anordnung der Maschinengehäuse 4, 5, 6 - entlang der äußeren Bewegungsbahn der Verschiebebehälter 15 erstreckt. Die Manschetten 23 und der Kragen 24 unterstützen das Weiterleiten der möglicherweise über die Spalte 18, 19 austretenden Schalenreste in den Schalensammelraum 13 der Maschinengehäuse 4, 5, 6.

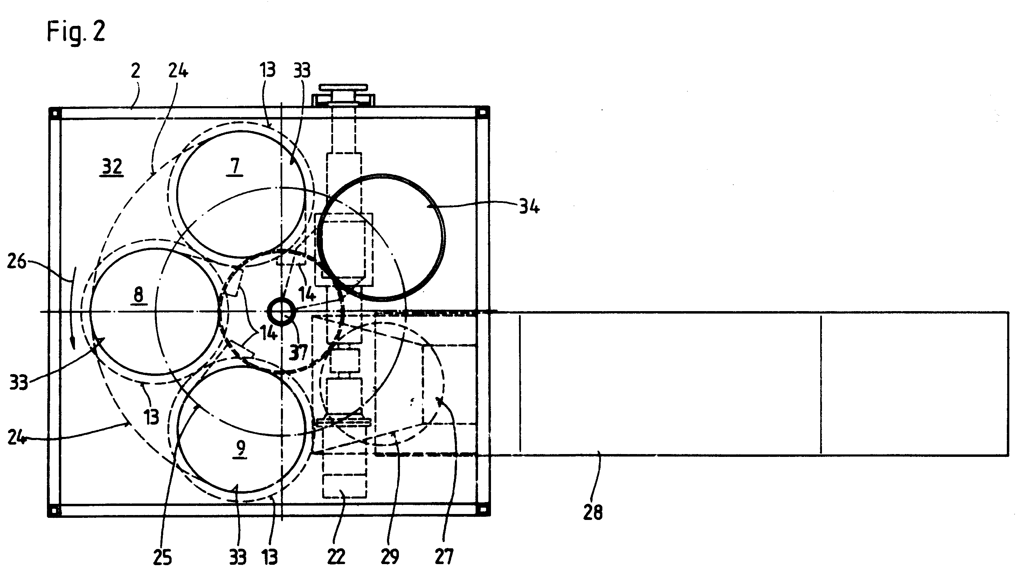

Auf demselben Mittenkreis 25 wie die Öffnungen 17 befindet sich in der Gleitfläche 16 im Anschluß an das in Verschieberichtung 26 letzte Maschinengehäuse 6 eine Entleerungsöffnung 27 (in Fig. 2 strichpunktiert dargestellt) mit einer über einem das geschälte Gut abtransportierenden Abförderer 28 endenden Austragrutsche 29 (vgl. Fig. 1 und 4).

Der Bewegungsraum 31 der Verschiebebehälter 15 auf der Gleitfläche 16 wird nach oben von einer Deckplatte 32 begrenzt, die vertikal oberhalb der Schälscheiben 12 liegende, dem Durchmesser der Verschiebebehälter 15 entsprechende Ausnehmungen 33 besitzt. Außerdem weist die Deckplatte 32 eine ebenfalls auf dem Mittenkreis 25 liegende Füllöffnung 34 auf, die zwischen dem in Verschieberichtung 26 ersten Maschinengehäuse 4 und der Entleerungsöffnung 27 angeordnet ist.

Die Lage der Entleerungs- und der Füllöffnung 27 und 34 entspricht der aufgrund der Anordnung der Maschinengehäuse 4, 5, 6 im Halbkreis vorgegebenen Teilung, womit gewährleistet ist, daß ein entsprechend dem Takt oder kontinuierlich weiterbewegter Verschiebebehälter 15 im Anschluß an das Entleeren entweder exakt unter der Füllöffnung 34 zur Ruhe kommt oder während des Durchlaufs über die Füllöffnung 34 befüllt wird. Über den Ausnehmungen 33 der Deckplatte 32 enden Wasserleitungen 35 (vgl. Fig. 1), die dem Reinigen der Verschiebebehälter 15 und dem Unterstützen des Austragens des Schälabfalls dienendes Wasser zuführen.

Die Schälanlage 3 besitzt eine zentrische Achse 36, deren oberhalb des zentralen Sammeltrichters 21 liegender Abschnitt als Antriebswelle 37 ausgebildet ist (vgl. Fig. 1). Die Antriebswelle 37 ist zur Mitnahme der Verschiebebehälter 15 mit einer der Anzahl der Verschiebebehälter 15 entsprechenden Zahl Mitnehmerarmen 38 versehen; bei der dargestellten Ausführung mit drei im Halbkreis angeordneten Maschinengehäusen 4, 5, 6 einer Entleerungsöffnung 27 und einer Füllöffnung 34 werden fünf Verschiebebehälter 15 und damit fünf Mitnehmerarme 38 benötigt. Die Antriebswelle 37 wird von einem oberhalb der Deckplatte 32 vertikal angeordneten, von einem Tragrahmen 39 gehaltenen Antriebsmotor 41 entsprechend dem vorgegebenen Takt und Zentriwinkel oder im kontinuierlichen Durchlauf in Verschieberichtung 26 gedreht.

Es ergibt sich somit ein automatischer Schälbetrieb mit insgesamt fünf in Verschieberichtung 26, d.h. im Kreis vorwärtsbewegten Verschiebebehältern 15, von denen sich drei über den Maschinengehäusen 4, 5, 6, einer zum Entleeren übel der Entleerungsöffnung 27 und einer zum Befüllen mit neu zu schälendem Gut unter der Füllöffnung 34 der Deckplatte 32 befinden. Aufgrund der karussellartigen Betriebsweise durchläuft ein Verschiebebehälter 15 im Kreislauf sukzessive die einzelnen Stationen der Schälanlage 3, beim taktweisen Betrieb jeweils nur unterbrochen von der durch die Schäldauer in den Topfschälmaschinen 7, 8, 9 vorgegebenen Verweilzeit.

**Patentansprüche**

1. Schälanlage für Erd- oder Baumfrüchte, insbesondere Kartoffeln, dadurch gekennzeichnet, daß stationären, rotierenden Scheiben (12) Schälgut-Aufnahmebehälter (15) temporär zugeordnet sowie die Scheiben (12) und/oder die Schälgut-Aufnahmebehälter (15) mit Schälwerkzeugen versehen sind.

2. Schälanlage nach Anspruch 1, dadurch gekennzeichnet, daß Schälmaschinegehäuse (4, 5, 6) die rotierenden Scheiben (12) aufweisen und über eine Gleitfläche (16) für als Verschiebebehälter (15) ausgebildete Schälgut-Aufnahmebehälter miteinander verbunden sind.

3. Schälanlage nach Anspruch 1 oder 2, dadurch gekennzeichnet, daß die Gleitfläche (16) zumindest über zwei Schälmaschinengehäusen (4, 5, 6) angeordnet und im Bereich der Scheiben (12) mit zumindest den Scheibendurchmessern entsprechenden Öffnungen (17) versehen ist sowie eine Entleerungsöffnung (27) aufweist.

4. Schälanlage nach einem oder mehreren der Ansprüche 1 bis 3, gekennzeichnet durch einen die Verschiebebehälter (15) von Öffnung zu Öffnung (17) bewegenden Antrieb (41).

5. Schälanlage nach einem oder mehreren der Ansprüche 1 bis 4, dadurch gekennzeichnet, daß die Gleitfläche (16) auf einer in, einem Maschinenrahmen (2) angeordneten Platte mit auf einem Kreis liegenden Öffnungen (17) ausgebildet ist.

6. Schälanlage nach einem oder mehreren der Ansprüche 1 bis 5, gekennzeichnet durch drei im Halbkreis angeordnete Schälmaschinengehäuse (4, 5, 6) und fünf auf dar Gleitfläche (16) bewegte Verschiebebehälter (15).

7. Schälanlage nach einem oder mehreren der Ansprüche 4 bis 6, dadurch gekennzeichnet, daß der Antrieb (41) mit einer zentralen, Mitnehmerarme (38) für die Verschiebebehälter (15) aufweisenden Drehachse (36, 37) verbunden ist.

8. Schälanlage nach einem oder mehreren der Ansprüche 3 bis 7, dadurch gekennzeichnet, daß die Öffnungen (17) der Gleitfläche (16) mit in die Maschinengehäuse (4, 5, 6) eintauchenden Manschetten (23) versehen sind.

9. Schälanlage nach einem oder mehreren der Ansprüche 3 bis 8, gekennzeichnet durch einen Kragen (24) auf der Gleitfläche (16) im Bereich der Öffnungen (17) entlang der äußeren Bewegungsbahn der Verschiebebehälter (15).

10. Schälanlage nach einem oder mehreren der Ansprüche 1 bis 9, dadurch gekennzeichnet, daß die Schälgut-Aufnahmebehälter (15) um ihre Längsachse rotieren können.

11. Schälanlage nach Anspruch 10, dadurch gekennzeichnet, daß die Behälter (15) an ihren den Scheiben (12) zugewandten Enden innen mit Verstrebungen versehen sind.

12. Schälanlage nach Anspruch 10 oder 11, gekennzeichnet durch regelbare Drehgeschwindigkeiten der Scheiben (12) und/oder der Behälter (15).

13. Schälanlage nach einem oder mehreren der Ansprüche 10 bis 12, dadurch gekennzeichnet, daß die Scheiben (12) und die Behälter (15) gegensinnig angetrieben sind.

14. Schälanlage nach einem oder mehreren der Ansprüche 1 bis 13, dadurch gekennzeichnet, daß den Scheiben (12) zugeordnete Schalenabläufe (14) in einen zentralen Sammeltrichter (21) münden.

**15.** Schälanlage nach einem oder mehreren der Ansprüche 1 bis 13, dadurch gekennzeichnet, daß den Scheiben (12) zugeordnete Schalenabläufe (14) über einer von einem rotierenden Abstreifer bestrichenen, zentralen Entsorgungsplatte münden.

**16.** Schälanlage nach Anspruch 15, dadurch gekennzeichnet, daß der Abstreifer mit der Drehachse (36, 37) verbunden ist.

**17.** Schälanlage nach Anspruch 14 oder 15 und 16, gekennzeichnet durch eine an den Sammeltrichter (21) oder der Entsorgungsplatte angeschlossene Abfallpumpe (22).

**18.** Schälanlage nach einem oder mehreren der Ansprüche 3 bis 17, dadurch gekennzeichnet, daß unter der Entleerungsöffnung (27) ein Abförderer (28) angeordnet ist.

**19.** Schälanlage nach einem oder mehreren der Ansprüche 3 bis 18, dadurch gekennzeichnet, daß die Verschiebebehälter (15) in einem unten von der Gleitfläche (16) und oben von einer eine Füllöffnung (34) aufweisenden Deckplatte (32) begrenzten Raum (31) zu bewegen sind.

**20.** Schälanlage nach Anspruch 19, dadurch gekennzeichnet, daß die Deckplatte (32) vertikal oberhalb der Scheiben (12) mit Ausnehmungen (33) versehen ist.

**21.** Schälanlage nach Anspruch 20, dadurch gekennzeichnet, daß die Ausnehmungen (33) zumindest entsprechend dem Durchmesser der Verschiebebehälter (15) bemessen sind.

Fig. 1

EP 0 487 115 A1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-2 012 802 (KRIECHEL R.)<br><br>* Seite 6, Absatz 13 - Seite 12, Absatz 1; Abbildungen 1-19 *<br>--- | 1,7,<br>12-14 | A23N7/02 |
| X | DE-C-533 535 (LÜCK F.)<br>* das ganze Dokument *<br>--- | 1,8 | |
| A | US-A-3 115 915 (STEBER F.J.)<br><br>----- | | |
| | | | **RECHERCHIERTE SACHGEBIETE (Int. Cl.5 )**<br><br>A23N<br>A47J |

Der vorliegende Recherchenbericht wurde für alle Patentansprüche erstellt

| Recherchenort | Abschlußdatum der Recherche | Prüfer |
|---|---|---|
| DEN HAAG | 04 MAERZ 1992 | ELSWORTH D. |